(19) Europäisches Patentamt
European Patent Office
Office européen des brevets

(11) **EP 3 433 509 B1**

(12) **EUROPÄISCHE PATENTSCHRIFT**

(45) Veröffentlichungstag und Bekanntmachung des Hinweises auf die Patenterteilung:
**13.05.2020  Patentblatt 2020/20**

(21) Anmeldenummer: **17817672.3**

(22) Anmeldetag: **28.11.2017**

(51) Int Cl.:
*F16F 7/10* (2006.01)    *E04B 1/98* (2006.01)

(86) Internationale Anmeldenummer:
**PCT/EP2017/080623**

(87) Internationale Veröffentlichungsnummer:
**WO 2018/099896 (07.06.2018 Gazette 2018/23)**

(54) **KOMPAKTES RÄUMLICHES ELLIPSOID-MASSENPENDEL**

COMPACT THREE-DIMENSIONAL ELLIPSOIDAL TUNED PENDULUM

PENDULE D'AMORTISSEMENT TRIDIMENSIONNEL COMPACT AVEC TRAJECTOIRE ELLÏPSOIDALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2016  DE 102016122999**

(43) Veröffentlichungstag der Anmeldung:
**30.01.2019  Patentblatt 2019/05**

(73) Patentinhaber: **Dahl, Burkhard**
**82386 Oberhausen (DE)**

(72) Erfinder: **Dahl, Burkhard**
**82386 Oberhausen (DE)**

(74) Vertreter: **von Hirschhausen, Helge**
**Grosse - Schumacher - Knauer - von Hirschhausen**
**Patent- und Rechtsanwälte**
**Nymphenburger Straße 14**
**80335 München (DE)**

(56) Entgegenhaltungen:
**WO-A1-92/02743      WO-A1-99/09278**
**CN-A- 102 535 674      JP-A- H 044 335**
**JP-A- H0 480 477      JP-A- S5 997 342**
**JP-A- H06 264 960      JP-A- S63 254 247**
**JP-A- 2004 308 314      JP-A- 2015 199 587**
**JP-U- H04 108 756      KR-A- 20140 040 881**

**Beschreibung**

Die Erfindung betrifft einen Schwingungstilger in der Art eines räumlichen Massenpendels. Die Erfindung betrifft ferner ein mit einem solchen Massenpendel versehenes Objekt.

Schon seit geraumer Zeit werden große Massenpendel, die als Schwerependel im Gravitationsfeld wirken, als Schwingungstilger für Bauwerke eingesetzt. Sie dienen dazu, die insbesondere von Wind, Wellenbewegungen, Erdbeben, Explosionen menschlichen Einflüssen (Personenbewegungen etc.) erzeugten Schwingungen abzumindern. Für das zu Schwingungen angeregte Bauwerk ergeben sich nämlich Beanspruchungen, die zu bedeutenden Problemen hinsichtlich Festigkeit, Standsicherheit, Dauerfestigkeit oder Sicherheit und Komfort anwesender Personen führen. Klassische Anwendungsfälle für Massenpendel in oder an Bauwerken sind z. B. Hochhäuser, Türme und Fußgängerbrücken. Massenpendel können aber auch in Schiffen oder anderen Objekten Anwendung finden, deren Schwingungen unerwünscht sind und reduziert werden sollen.

Es sind verschiedene Bauarten von Massenpendeln bekannt. Grundsätzlich besteht jedes Massenpendel, unabhängig von der jeweiligen konkreten Ausbildungsform, im Wesentlichen aus einer in geeigneter Weise schwingungsfähig mit einem Objekt verbundenen Masse (Pendelmasse, Schwingmasse). Die verschiedenen Bauarten unterscheiden sich in der Art der Kopplung der Masse an das Objekt und in der Art der Dämpfung. Das Dokument CN 102535674 A offenbart ein Massenpendel gemäß dem Oberbegriff des Anspruchs 1. Weitere gattungsgemäße Massenpendel sind in den Dokumenten JP H04 4335 A, WO 92/02743 A1 oder JP S63 254247 A offenbart.

Bezüglich der Dämpfung eines Massenpendels in seiner Anwendung als Schwingungstilger ist es allgemein bekannt, eine Pendelmasse schwingfähig an dem zu schützenden Objekt aufzuhängen und Dämpfungselemente zwischen der Pendelmasse und dem Objekt anzuordnen. Die Schwingungsdauer des Massenpendels wird dabei auf die zu bedämpfende Schwingungsdauer des Objekte abgestimmt. Regulär ist dies die unterste Resonanzfrequenz, die aus einer Modalanalyse rechnerisch ermittelt oder am realen Objekt gemessen wird. Wird das Objekt zu Schwingungen angeregt, erfährt das Massenpendel eine phasenverschobene Schwingungsbewegung. Die Relativbewegung wird durch die Dämpfungselemente bedämpft und somit dem Gesamtsystem gerichtete mechanische Energie entzogen und regulär in thermische Energie dissipiert. Bei geeigneter Abstimmung werden damit sowohl die Schwingungsamplitude wie auch die Nachschwingungsdauer des zu schützenden Objektes deutlich reduziert.

Bezüglich der Bauarten gewöhnlicher Massenpendel ist es bekannt, eine Pendelmasse über annähernd parallele Pendelstangen gelenkig an dem zu schützenden Objekt aufzuhängen. Durch diese Anordnung entsteht ein Kugelpendel (sphärisches Pendel), bei dem sich die Pendelmasse während des Schwingungsvorgangs symmetrisch auf der Oberfläche einer Kugel bewegt. Die Schwingungsdauer des Massenpendels kann dabei auf eine beliebige vorgegebene Schwingungsdauer abgestimmt werden, zum Beispiel auf eine Resonanzfrequenz des Objektes, an dem das Pendel befestigt wird.

Die Schwingungsdauer T (reziproker Wert der Schwingungsfrequenz f) herkömmlicher Schwerependel wird maßgeblich durch die Pendellänge $l_p$ nach der Formel $T = 2\pi \sqrt{\dfrac{l_p}{g}}$ bestimmt (g: Fallbeschleunigung der Erde). Bei der Anwendung als Fliehkraftpendel in rotierenden Objekten wird anstelle der Fallbeschleunigung g die Zentrifugalbeschleunigung $a_{ZF}$ angesetzt. Die Größe der Pendelmasse $M_P$, deren Verteilung (Massenträgheitsmomente $I_x$, $I_y$) und die Pendelstangen haben nur einen sehr geringen, für die praktische Dimensionierung meist zu vernachlässigenden Einfluss.

Neben der Ausführung als einfaches Kugelpendel gibt es Konstruktionen, welche die Pendelmasse in einem gefalteten Doppelpendel anordnen oder eine an die Hauptmasse gekoppelte Nebenmasse auf horizontaler Ebene oder mit negativem Krümmungsradius führen. Angestrebte Ziele hierbei sind entweder, die für eine vorgegebene Schwingungsdauer erforderliche Pendellänge (aufgrund der Proportionalität der Schwingungsdauer zur Wurzel der Pendellänge verlängert sich diese bei steigender Schwingungsdauer quadratisch) in einer maßgeblich geringeren Bauhöhe zu realisieren, oder für asymmetrisch um die Hauptachsen schwingende Objekte, z. B. Hochhäuser mit asymmetrischem Grundriss, eine unterschiedliche Abstimmung der beiden Hauptachsen zu ermöglichen.

Nachteilig bei bekannten Massenpendeln sind die bei langen Schwingungsdauern systembedingt sehr großen Bauhöhen und folglich der Verlust an wertvollem Bauvolumen. Die genannten Varianten erfordern technisch aufwendige, kostenintensive Konstruktionen, wobei teilweise lineare Führungselemente mit erhöhter Reibung verwendet werden, die zu einem schlechteren Ansprechverhalten des Massenpendels führen. Reguläre einfache Kugelpendel ermöglichen nur eine, richtungsunabhängige Schwingungsdauer, sodass diese nur für symmetrisch schwingende Objekte geeignet sind. Bei ausgeführten Objekten zeigt sich oft, dass deren rechnerisch prognostizierten Schwingungsdauern zu lang ermittelt wurden. Beispielsweise sind reale Steifigkeiten von Hochhäusern oft größer mit dementsprechend kürzeren (real gemessenen) Schwingungsdauern und erfordern durch die quadratische Abhängigkeit eine bedeutende Kürzung der Pendellänge beim Einbau. Die in diesem Zusammenhang anfänglich eingeplante Puffer-Bauhöhe für die nachträgliche Abstimmung ist ebenfalls nicht nutzbar.

Aufgabe der Erfindung ist es, eine alternative Lösung für Massependel aufzuzeigen, welche die vorgenannten Nachteile vermeidet. Das hierzu auszubildende Massenpendel soll eine geringe Bauhöhe aufweisen, in beiden horizontalen Hauptachsen getrennt abstimmbar, bei gutem Ansprechverhalten weitgehend verschleißfrei, mit geringer Geometrieänderung effektiv auf die geplanten Schwingungsdauern abstimmbar, sowie kostengünstig zu realisieren sein.

Gelöst wird diese Aufgabe durch ein Massenpendel mit den Merkmalen des Anspruchs 1 Vorteilhafte und zweckmäßige Ausgestaltungen des erfindungsgemäßen Massenpendels sind in den zugehörigen Unteransprüchen angegeben.

Das erfindungsgemäße räumliche Massenpendel umfasst eine Pendelmasse und wenigstens drei, vorzugsweise vier Pendelstangen. Die Pendelstangen sind um die Pendelmasse herum verteilt angeordnet und jeweils an einem ersten Kopplungspunkt an das Objekt und an einem zweiten Kopplungspunkt an einen unteren Abschnitt der Pendelmasse gekoppelt. Wenigstens zwei der Pendelstangen sind so bemessen und gespreizt angeordnet, dass der Abstand zwischen ihren ersten Kopplungspunkten größer als der Abstand zwischen ihren zweiten Kopplungspunkten ist, sodass bei einer Bewegung der Pendelmasse deren Schwerpunkt durch die Pendelstangen auf der Oberfläche eines virtuellen Ellipsoids geführt wird.

Gemäß der Erfindung wird die Pendelmasse durch eine geeignete Konstruktion vom Grundtyp "räumliche Doppelinnenschwinge" mit mindestens drei, regulär vier Pendelstangen geführt, die regelmäßig oder unregelmäßig am Umfang verteilt im unteren Bereich der Pendelmasse anschließen. Der Schwerpunkt der Pendelmasse bewegt sich auf der Oberfläche eines Ellipsoids, wobei die unterschiedlich wählbaren Krümmungsradien in den Hauptachsen (x- und y-Richtung) im Wesentlichen die gewünschten Pendellängen und damit die Schwingungsdauern in Richtung der beiden Hauptachsen bestimmen. Weitere Einrichtungen zur Führung oder sonstigen Beeinflussung der Bewegungsbahn der Pendelmasse sind nicht vorgesehen.

Die erfindungsgemäß vorgesehene Spreizung der Pendelstangen kann insbesondere durch eine Anordnung gleich langer Pendelstangen mit einem Winkel ungleich 0° (nicht parallele Anordnung) und/oder durch Verwendung von Pendelstangen ungleicher Länge und/oder unterschiedliche Koordinaten der jeweiligen ersten und/oder zweiten Kopplungspunkte bezüglich der Hochachse (z-Richtung) realisiert werden.

Die Erfindung beruht grundsätzlich auf der Erkenntnis, dass durch eine geeignete Auslegung einer viergliedrigen Gelenkkette (Koppelgetriebe) ein Punkt in einer Ebene in einem begrenzten Bereich in guter Näherung linear geführt werden kann. Die zugrundeliegende ebene Mechanik beruht auf der bereits erwähnten symmetrische Doppelinnenschwinge mit dem Untertyp Roberts'scher Lenker (im englischen Sprachraum als "Roberts (Straigt Line) Mechanism" bekannt). Mit geeignet angepasster Geometrie der Doppelinnenschwinge lassen sich auch Symmetriepunkte der schwingenden Koppel bestimmen, die sich auf definierten kreisförmigen Bahnen bewegen, deren Radien - wie für die hier geforderten Anwendungen - bedeutend größer als die Höhe der Mechanik des Koppelgetriebes sind und deren Mittelpunkte dadurch außerhalb, d. h. im vorliegenden Anwendungsfall eines Pendels über der Mechanik liegen. Hierauf basierend lassen sich sehr kompakte ebene Massenpendel konstruieren.

In der vorliegenden Erfindung wird der ebene Ansatz darüber hinaus auf eine räumliche Mechanik mit mindestens drei, regulär vier Schwingen (hier Pendelstangen) übertragen. Mit einer Anpassung der Geometrieparameter werden die Bahnkurven des Pendelmassen-Schwerpunkts mit definierten Krümmungsradien (gleich Pendellängen) getrennt für die x- und y- Richtung abstimmbar.

Alle Massenpendel beruhen auf dem physikalischen Effekt der periodischen Umwandlung der potenziellen Energie der Pendelmasse von einem höher gelegenen, seitlich verschobenen Punkt im Gravitationsfeld (oder Zentrifugalfeld) in die kinetische Energie im tiefsten Punkt der Bahnkurve (Ruhepunkt). Bei dem vereinfachten Ansatz als mathematisches Pendel werden eine punktförmig konzentrierte Pendelmasse und masselose Pendelstangen angenommen. Dadurch wird in der Bewegungsgleichung nur die kinetische Energie der Translationsbewegung der Pendelmasse berücksichtigt. Für herkömmliche Kugelpendel sind die Abweichungen zur realen Schwingungsdauer vernachlässigbar, da die Pendelmasse nur eine geringe Winkelgeschwindigkeit erreicht und dadurch der Anteil der Rotationsenergie an der gesamten kinetischen Energie gering ist.

Bei der erfindungsgemäßen Ausführung als räumliche Doppelinnenschwinge erreichen die Koppel und die verbundene Pendelmasse jedoch signifikant höhere Winkelgeschwindigkeiten, sodass der Anteil der Rotationsenergie größer ist und eine angepasste Bewegungsgleichung für physikalische Pendel verwendet wird. Somit kann die Schwingungsdauer bei unveränderter Geometrie der Aufhängung durch größere Massenträgheitsmomente der Pendelmasse verlängert werden.

Der Schwerpunkt der Pendelmasse sollte sich oberhalb der zweiten Kopplungspunkte befinden, damit die mit der Erfindung erreichbare Verringerung der Pendelbauhöhe bestmöglich ausgenutzt werden kann.

Die Pendelmasse bildet einen integralen Bestandteil der Mechanik des Massenpendels und kann selbst die Funktion des Koppelelementes übernehmen. Das bedeutet, dass die Pendelstangen mittels geeigneter Gelenke direkt an die Pendelmasse gekoppelt sind. Alternativ kann jedoch ein separates Koppelelement vorgesehen sein, insbesondere eine Platte, auf dem die Pendelmasse befestigt ist. Die Kopplung der Pendelstangen an die Pendelmasse ist in diesem Fall über das Koppelelement realisiert.

Gemäß einer besonders bevorzugten Ausführungsform der Erfindung ist eine Anordnung der Pendelstangen vorgesehen, die eine voneinander unabhängige Einstellung der Schwingungsdauern des Massenpendels in den beiden horizontalen Hauptrichtungen ermöglicht. Hierbei bildet wenigstens eine Pendelstange mit einer in horizontaler Umfangsrichtung der Pendelmasse benachbarten ersten Pendelstange eine erste Spreizung und mit einer anderen in horizontaler Umfangsrichtung der Pendelmasse benachbarten zweiten Pendelstange eine zweite Spreizung, die unterschiedlich zur ersten Spreizung ist. Die Schwingungsdauer (und damit die Schwingungsfrequenz) des Massenpendels in einer Richtung ist bei der erfindungsgemäßen Konstruktion nämlich (neben der Systemhöhe $h_z$) maßgeblich durch die effektive Spreizung der Pendelstangen in dieser Richtung bestimmt, sodass unterschiedliche Spreizungen in unterschiedlichen Richtungen zu unterschiedlichen Schwingungsdauern in diesen Richtungen führen.

Darüber hinaus kann das Massenpendel zur Ausführung von Torsionsschwingungen um eine Hochachse ausgelegt sein. Das beschriebene Massenpendel besitzt nämlich ebenfalls einen rotatorischen Freiheitsgrad um die z-Achse und kann auf die Torsionsschwingung um diese Hochachse (Gierachse), die der Symmetrieachse der Pendelmasse entspricht, abgestimmt und gegebenenfalls bedämpft werden.

Die Aufgabe der Erfindung wird auch durch ein schwingfähiges oder nicht schwingfähiges Objekt gelöst, das mit einem Massenpendel der oben beschriebenen Art versehen ist.

Unter einem nicht schwingfähigen Objekt soll hier eine Struktur verstanden werden, die als Träger für das Massenpendel dient, wobei das Hauptziel aber nicht die Dämpfung von Schwingungen dieses Objekts ist. Vielmehr zielt die Erfindung in diesem Fall auf ein eigenständig abstimmbares Pendel ab, um etwa Fahrgeschäfte oder Detektoren mit entsprechenden Bewegungsbahnen zu entwickeln.

Eine der Hauptanwendungen der Erfindung ist jedoch der Einsatz des Massenpendels als Schwingungstilger wie eingangs erläutert. Für diesen Anwendungsfall sieht die Erfindung ein schwingfähiges Objekt vor, beispielsweise ein Bauwerk, das mit einem erfindungsgemäßen Massenpendel und wenigstens einem Dämpferelement versehen ist. Das Dämpferelement ist einerseits direkt oder indirekt an die Pendelmasse und andererseits direkt oder indirekt an das zu bedämpfende Objekt gekoppelt.

Weitere Merkmale und Vorteile der Erfindung ergeben sich aus der nachfolgenden Beschreibung und aus den beigefügten Zeichnungen, auf die Bezug genommen wird. In den Zeichnungen zeigen:

- Figur 1 eine Seitenansicht eines klassischen sphärischen Pendels mit Abmessungen;

- Figur 2 eine Seitenansicht eines real ausgeführten Doppelpendels mit Abmessungen;

- Figur 3 eine räumliche Ansicht eines erfindungsgemäßen Massenpendels mit vier Pendelstangen;

- Figur 4a eine erste Seitenansicht eines erfindungsgemäßen Massenpendels mit Abmessungen;

- Figur 4b eine um 90° gedrehte zweite Seitenansicht des Massenpendels aus Figur 4a mit Abmessungen;

- Figur 5 einen Größenvergleich zwischen den Pendeln aus den Figuren 1, 2 und 4a bzw. 4b;

- Figur 6a eine Seitenansicht eines erfindungsgemäßen Massenpendels in Ruhestellung;

- Figur 6b eine Seitenansicht des Massenpendels aus Figur 6a in ausgelenkter Stellung; und

- Figur 7 eine räumliche Ansicht eines erfindungsgemäßen Massenpendels in symmetrischer Ausführung mit acht Pendelstangen.

Für alle geometrischen Betrachtungen wird ein kartesisches Koordinatensystem zugrundegelegt, bei dem aufeinander senkrechte x- und y-Achsen eine horizontale Ebene aufspannen und eine hierzu wiederum senkrechte z-Achse die vertikale Hochachse darstellt.

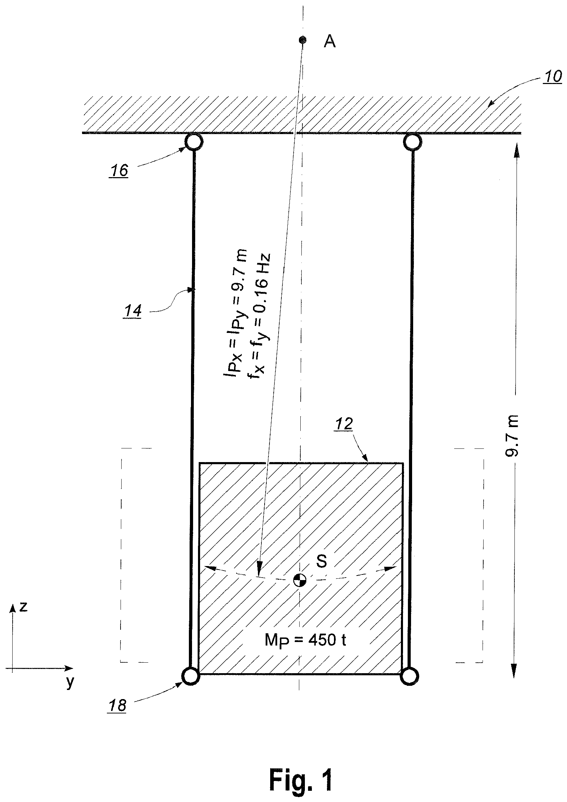

Zur Erläuterung der Erfindung werden anhand der Figuren 1, 2 und 4 beispielhaft drei auf unterschiedlichen Konstruktionen basierende Pendel beschrieben, die grundsätzlich alle als Schwingungstilger für ein real ausgeführtes Objekt geeignet sind bzw. wären. Für das 209 m hohe (z-Richtung) Gebäude, welches für Windgeschwindigkeiten bis 190 km/h und Erdbeben bis Stärke 9 Richter-Magnitude ausgelegt ist, wird eine Pendelmasse von 450 Tonnen benötigt. Bedingt durch seinen unsymmetrischen Grundriss, weist das Gebäude unterschiedliche horizontale Eigenfrequenzen von $f_x = 0,25$ Hz in x-Richtung und $f_y = 0,16$ Hz in y-Richtung auf.

Als Schwingungstilger für dieses Gebäude könnte in y-Richtung ein klassisches sphärisches Pendel verwendet werden, wie es in Figur 1 dargestellt ist. Eine Pendelmasse 12 mit $M_P = 450$ t ist an vier Pendelstangen 14 an einem Objekt 10, hier an einer Decke im obersten Bereich des besagten Gebäudes, aufgehängt. Von den vier Pendelstangen 14 sind in der Seitenansicht von Figur 1 nur zwei zu sehen. Die Pendelstangen 14 sind über den äußeren Umfang der Pendelmasse verteilt angeordnet. Jede der Pendelstangen 14 ist einerseits an eine Stelle im unteren Bereich Pendelmasse 12 und andererseits an einer Stelle in einem nach unten offenen Bereich des Objekts 10 gekoppelt, sodass die Pendelmasse 12 im Ruhezustand an den vier im Wesentlichen parallel ausgerichteten Pendelstangen frei aufgehängt ist, d. h. die Kopplungsstellen erlauben eine im Wesentlichen uneingeschränkte Auslenkung der Pendelmasse 12 in alle möglichen Bewegungsrichtungen.

Um bei dem in Figur 1 gezeigten Pendel eine Eigenschwingungsfrequenz der Pendelmasse 12 von $f_y$ = 0,16 Hz zu erreichen, ist gemäß der eingangs genannten Formel eine Pendellänge $I_p$ von 9,7 m erforderlich. Die Pendellänge $I_p$ reicht vom Schwerpunkt S (Massenmittelpunkt) der Pendelmasse 12 bis zum virtuellen Aufhängungspunkt A der Pendelmasse 12, der dem Mittelpunkt der durch die Anordnung der Pendelstangen 14 vorgegebenen virtuellen Kugeloberfläche entspricht, auf der sich der Schwerpunkt der Pendelmasse 12 bewegen kann.

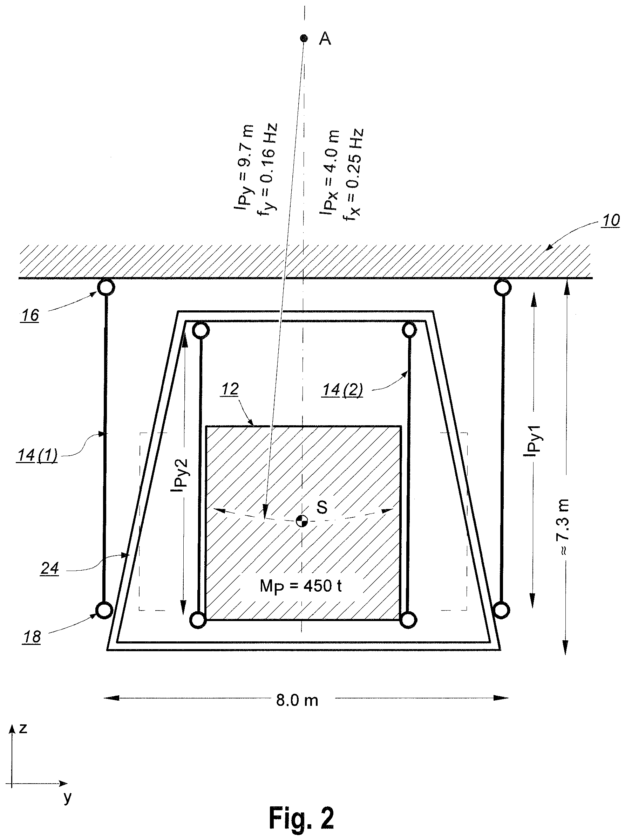

Aufgrund der beengten Platzverhältnisse an der Spitze des Gebäudes und der unterschiedlichen Schwingungsfrequenzen in x- und y-Richtung wurde anstelle eines klassischen sphärischen Pendels ein Doppelpendel mit geteilten Pendelstangen ausgeführt, wie es in Figur 2 dargestellt ist. An vier Pendelstangen 14(1) ist eine Rahmenkonstruktion 24 aufgehängt, in der wiederum mittels weiterer vier Pendelstangen 14(2) die Pendelmasse 12 mit $M_P$ = 450 t aufgehängt ist. In x-Richtung wird die Bewegung der Pendelstangen 14(2) durch lineare Führungen verhindert, sodass sich unterschiedliche Pendellängen und Schwingungsfrequenzen in x- und y-Richtung ergeben. Von den Pendelstangen 14(1) und 14(2) sind in der Seitenansicht von Figur 2 jeweils nur zwei Stangen zu sehen.

Mit dieser Konstruktion lässt sich die Bauhöhe des Pendels bereits deutlich reduzieren, da der virtuelle Aufhängungspunkt A weiter nach oben verschoben ist. Der Pendellänge von $I_{Py}$ = 9,7 m für eine Schwingung mit $f_y$ = 0,16 Hz steht hier eine Bauhöhe von nur 7,3 m gegenüber. Allerdings ergibt sich aufgrund der aufwendigen Ausführung als Doppelpendel für das Gesamtsystem ein Gewicht von 570 t bei Außenabmessungen von 8,0 m x 8,0 m x 7,3 m, insbesondere bedingt durch die Mehrzahl von Pendelstangen und die Rahmenkonstruktion 24.

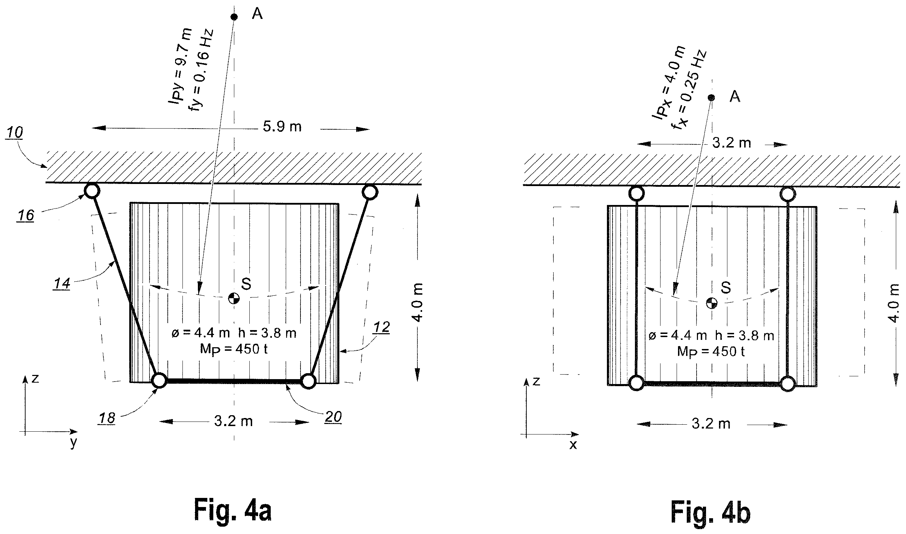

In Figur 4 ist ein erfindungsgemäßes Massenpendel gezeigt, das hinsichtlich der geforderten Funktion äquivalent zu dem ausgeführten Doppelpendel gemäß Figur 2 ist und nachfolgend ausführlicher beschrieben wird. Zum besseren Verständnis wird hierbei auch auf die schematische räumliche Darstellung eines erfindungsgemäßen Massenpendels Bezug genommen, in der bestimmte Bauteile besser erkennbar sind.

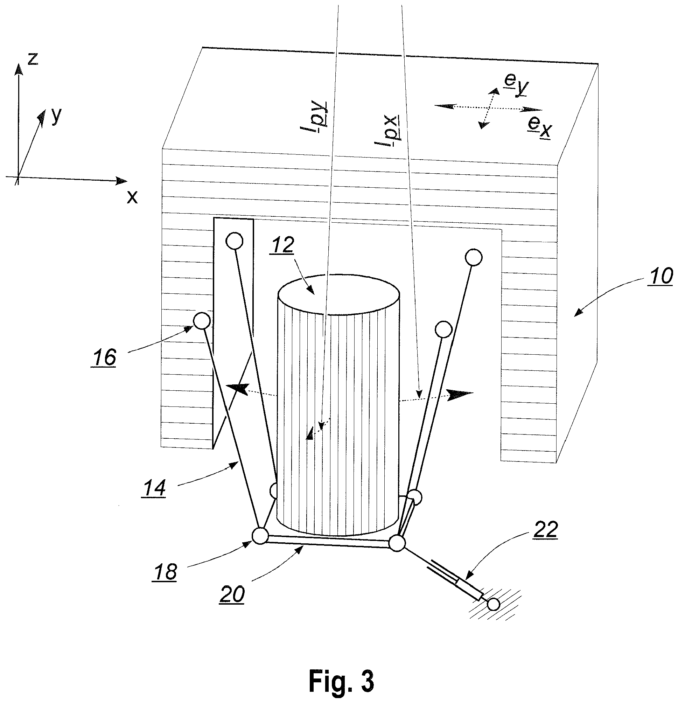

Die Pendelmasse 12 mit $M_P$ = 450 t besteht aus einem stehenden Stahlzylinder mit 4,4 m Durchmesser und 3,8 m Höhe. Die Pendelmasse 12 ist mit vier Pendelstangen 14 am Objekt 10, hier an der Gebäudedecke, aufgehängt. Die oberen Enden der Pendelstangen 14 sind an ersten Kopplungspunkten mittels Gelenklagern 16 frei rotierend an die Gebäudedecke gekoppelt, während die unteren Enden der Pendelstangen 14 an unteren Kopplungspunkten mittels Gelenklagern 18 frei rotierend entweder, wie in Figur 3 dargestellt, an ein Koppelelement 20 in Form einer Platte oder dergleichen, auf dem die Pendelmasse 12 stehend befestigt ist, oder, wie in den Figuren 4a und 4b dargestellt, direkt an die Pendelmasse 12 in deren unterem Bereich gekoppelt sind. Im ersten Fall ist die Masse des Koppelelements 20 als Bestandteil der Pendelmasse 12 anzusehen. In jedem Fall befindet sich der Schwerpunkt S der Pendelmasse 12 oberhalb der unteren Kopplungspunkte.

Die vier Pendelstangen 14 sind über den Umfang der Pendelmasse 12 verteilt angeordnet, wobei die Pendelstangen in Umfangsrichtung gleiche oder ungleiche Abstände voneinander haben können.

Zwischen dem Massenpendel und dem Objekt 10 sind ein oder mehrere Dämpferelemente 22 angeordnet. Die Dämpferelemente 22 können direkt an der Pendelmasse 12 oder, wie in Figur 3 dargestellt, am Koppelelement 20 angreifen.

In x-Richtung lässt sich die im Vergleich zur y-Richtung höhere Schwingungsfrequenz von $f_x$ = 0,25 Hz mit vertikal angeordneten 4,0 m langen Pendelstangen 14 erzielen (siehe Figur 4b). Für die niedrigere Schwingungsfrequenz von 0,16 Hz in y-Richtung werden die Pendelstangen 14 von 3,2 m auf 5,9 m gespreizt an der Gebäudedecke befestigt. Das bedeutet, dass die unteren Kopplungspunkte der Pendelstangen 14 in y-Richtung einen Abstand von 3,2 m haben, während der Abstand zwischen den oberen Kopplungspunkten in derselben Richtung 5,9 m beträgt (siehe Figur 4a).

Diese besondere Aufhängung ergibt für die Schwingungen in y-Richtung eine physikalische Pendellänge von 9,7 m, obwohl die Höhe des Gesamtsystems auch gegenüber dem in Figur 2 gezeigten Doppelpendel noch einmal deutlich reduziert ist. Genauer gesagt ist für das erfindungsgemäße Pendel nach Figur 4 nur ein Brutto-Bauraum von ca. 6,0 m x 6,0 m x 4,5 m (inklusive Freiraum für die Schwingungsbewegungen und Bauraum für die Koppelelemente) erforderlich.

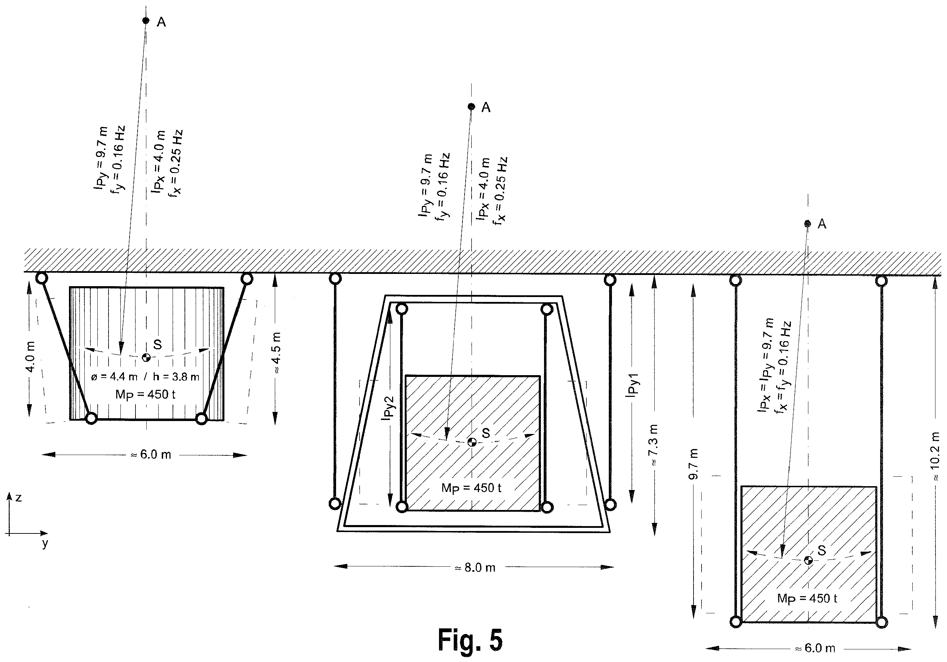

In Figur 5 sind die in den Figuren 1, 2 und 4 gezeigten Pendel noch einmal von rechts nach links in einer Nebeneinander-Anordnung dargestellt, um die Größenverhältnisse zu verdeutlichen. Insbesondere die Bauhöhe von nur 4,5 m des erfindungsgemäßen Pendels fällt wesentlich niedriger als die regulär erforderliche Pendellänge in y-Richtung des klassischen sphärischen Pendels von ca. 10,2 m wie auch die des Doppelpendels von 7,3 m aus.

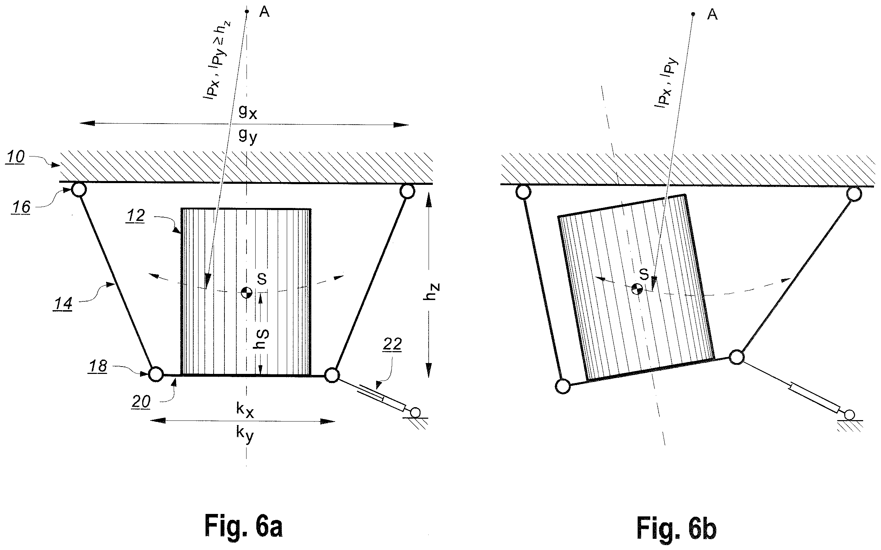

Die Figuren 6a und 6b zeigen verallgemeinert die erfindungsgemäße Aufhängung der Pendelmasse 12 mit gespreizt angeordneten Pendelstangen 14 (Ruhestellung in Figur 6a) und die daraus resultierende Schwingung (ausgelenkte Stellung in Figur 6b) in einer Ebene in x-Richtung oder y-Richtung. In der jeweiligen Ebene bewegt sich der Schwerpunkt S der Pendelmasse 12 auf einer kreisförmigen Bahn. Insgesamt kann sich also der Schwerpunkt S auf der Oberfläche eines virtuellen Ellipsoids bewegen, der durch zwei Hauptachsen (x- und y-Achse) bestimmt ist, welche wiederum den Pendellängen $I_{Px}$, $I_{Py}$ in x- und y-Richtung entsprechen. Die beiden Pendellängen $I_{Px}$, $I_{Py}$ können durch entsprechende Systemhöhe $h_z$ und Spreizungen der Pendelstangen 14 unterschiedlich groß gewählt werden. Das bedeutet, dass die maßgeblich von den Pendellängen abhängigen Schwingungsdauern des Massenpendels in den beiden Hauptrichtungen getrennt voneinander abgestimmt werden können.

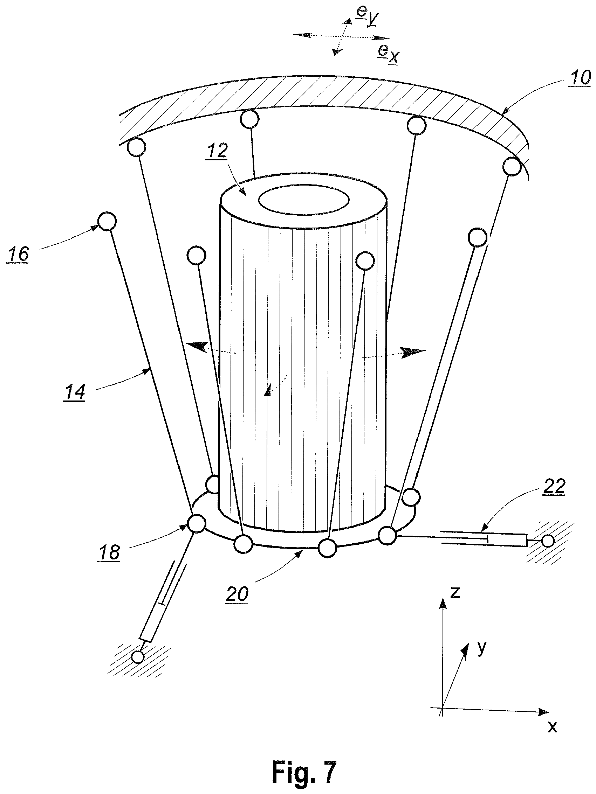

In Figur 7 ist beispielhaft eine weitere Ausführungsform eines Massenpendels in symmetrischer Ausführung mit einer Vielzahl, hier acht, Pendelstangen 14 gezeigt. Bei dieser Ausführungsform sind alle Pendelstangen 14 relativ zueinander gespreizt angeordnet, d. h. der Abstand zwischen zwei beliebigen Pendelstangen 14 ist an deren unteren Kopplungspunkten kleiner als an den oberen Kopplungspunkten. Zum Vergleich: Bei der in den Figuren 4a und 4b gezeigten Ausführungsform gilt dies nur für die in einer der beiden horizontalen Hauptrichtungen (y-Richtung, siehe Figur 4a) benachbarten Pendelstangen 14, während die in der anderen Hauptrichtung (x-Richtung, siehe Figur 4b) benachbarten Pendelstangen 14 im Wesentlichen gleiche Abstände zwischen den oberen und unteren Kopplungspunkten haben.

Aus den obigen Ausführungen ergibt sich, dass die Erfindung selbstverständlich nicht auf das oben beschriebene Ausführungsbeispiel beschränkt ist. Der Fachmann erkennt allgemein, dass basierend auf der neuartigen Konstruktion bei vorgegebener Pendelmasse gewünschte Schwingungsfrequenzen durch eine geeignete gespreizte Anordnung der Pendelstangen erreicht werden können, gegebenenfalls auch unterschiedliche Frequenzen in den beiden Hauptrichtungen, wobei die Pendelbauhöhe gegenüber bekannten Konstruktionen wesentlich verringert werden kann. Hierfür sind grundsätzlich mindestens drei Pendelstangen erforderlich, regulär sollten jedoch vier, gegebenenfalls können aber auch mehr Pendelstangen verwendet werden.

Als schwingfähiges Objekt 10, dessen Schwingungen bedämpft werden sollen, kommen neben Gebäuden wie Hochhäusern, Türmen, Brücken etc. auch Schiffe, Offshore-Anlagen, schwingende oder rotierende Maschinenteile wie Rotoren und Rotorblätter und beliebige andere Strukturen in Betracht.

Ferner ist die Anwendung der Erfindung als eigenständig abstimmbares Pendel, ohne Kopplung an ein schwingendes Objekt, möglich, um beispielsweise Fahrgeschäfte oder Detektoren damit zu entwickeln. Die kompakte einstellbare Kinematik kann im einfachsten Fall zur Führung eines Punktes auf der Oberfläche eines Ellipsoides verwendet werden.

Die jeweiligen Pendelstangen 14 können als starre Elemente mit geeigneten ersten und zweiten Gelenklagern 16, 18 oder als funktionell gleichwertige biegeweiche Zugglieder wie Seile, Bänder, Ketten, Spannelemente oder dergleichen ausgeführt werden, die eine Rotation an den Kopplungspunkten zulassen.

BEZUGSZEICHENLISTE

| | |
|---|---|
| 10 | Objekt |
| 12 | Pendelmasse |
| 14 | Pendelstangen |
| 16 | erster (oberer) Kopplungspunkt (Gelenklager) |
| 18 | zweiter (unterer) Kopplungspunkt (Gelenklager) |
| 20 | Koppelelement |
| 22 | Dämpferelemente |
| 24 | Rahmenkonstruktion |

**Patentansprüche**

1. Schwingungstilger für ein zu schützendes Objekt (10) in der Art eines räumlichen Massenpendels mit einer Pendelmasse (12), wenigstens drei, vorzugsweise vier Pendelstangen (14), die um die Pendelmasse (12) herum verteilt angeordnet sind und jeweils an einem ersten Kopplungspunkt an das Objekt (10) und an einem zweiten Kopplungspunkt an einen unteren Abschnitt der Pendelmasse (12) gekoppelt sind, **dadurch gekennzeichnet, dass** wenigstens zwei Pendelstangen (14) so bemessen und gespreizt angeordnet sind, dass der Abstand zwischen ihren ersten Kopplungspunkten größer als der Abstand zwischen ihren zweiten Kopplungspunkten ist, sodass bei einer Bewegung der Pendelmasse (12) deren Schwerpunkt durch die Pendelstangen (14) auf der Oberfläche eines virtuellen Ellipsoids geführt wird.

2. Schwingungstilger nach Anspruch 1, **dadurch gekennzeichnet, dass** sich der Schwerpunkt (S) der Pendelmasse (12) oberhalb der zweiten Kopplungspunkte befindet.

3. Schwingungstilger nach Anspruch 1 oder 2, **dadurch gekennzeichnet, dass** die Pendelmasse (12) auf einem Koppelelement (20), insbesondere einer Platte, befestigt ist und die Kopplung der Pendelstangen (14) an die Pendelmasse (12) über das Koppelelement (20) realisiert ist.

4. Schwingungstilger nach einem der vorhergehenden Ansprüche, **dadurch gekennzeichnet, dass** wenigstens eine Pendelstange (14) mit einer in horizontaler Umfangsrichtung der Pendelmasse (12) benachbarten ersten Pendelstange (14) eine erste Spreizung und mit einer anderen in horizontaler Umfangsrichtung der Pendelmasse (12) benachbarten zweiten Pendelstange (14) eine zweite Spreizung bildet, die unterschiedlich zur ersten Spreizung ist.

5. Schwingungstilger nach einem der vorhergehenden Ansprüche **dadurch gekennzeichnet, dass** das Massenpendel zur Ausführung von Torsionsschwingungen um eine Hochachse (z) ausgelegt ist.

6. Schwingfähiges oder nicht schwingfähiges Objekt (10), versehen mit einem Schwingungstilger nach einem der vorhergehenden Ansprüche.

7. Schwingfähiges Objekt (10), versehen mit einem Schwingungstilger nach einem der vorhergehenden Ansprüche und wenigstens einem Dämpferelement (22), das einerseits direkt oder indirekt an die Pendelmasse (12) und andererseits direkt oder indirekt an das Objekt (10) gekoppelt ist.

**Claims**

1. Oscillation absorber for an object to be protected (10) in the manner of a spatial mass pendulum with a pendulum mass (12), at least three, preferably four, pendulum rods (14) which are arranged distributed around the pendulum mass (12) and are each coupled at a first coupling point to the object (10) and at a second coupling point to a lower section of the pendulum mass (12), **characterized in that** at least two pendulum rods (14) are dimensioned and spread such that the distance between their first coupling points is greater than the distance between their second coupling points, so that during a movement of the pendulum mass (12) its center of gravity is guided by the pendulum rods (14) on the surface of a virtual ellipsoid.

2. Oscillation absorber according to claim 1, **characterized in that** the center of gravity (S) of the pendulum mass (12) is located above the second coupling points.

3. Oscillation absorber according to claim 1 or 2, **characterized in that** the pendulum mass (12) is fixed on a coupling element (20), in particular a plate, and the coupling of the pendulum rods (14) to the pendulum mass (12) is realized via the coupling element (20).

4. Oscillation absorber according to any one of the preceding claims, **characterized in that** at least one pendulum rod (14) forms a first spread with a first pendulum rod (14) adjacent to the at least one pendulum rod (14) in the horizontal circumferential direction of the pendulum mass (12) and a second spread with another second pendulum rod (14) adjacent to the at least one pendulum rod (14) in the horizontal circumferential direction of the pendulum mass (12), the second spread being different from the first spread.

5. Oscillation absorber according to any one of the preceding claims, **characterized in that** the mass pendulum is designed to carry out torsional oscillations about a vertical axis (z).

6. Oscillating or non-oscillating object (10) provided with an oscillation absorber according to any one of the preceding claims.

7. Oscillating object (10) provided with an oscillation absorber according to any one of the preceding claims and at least one damper element (22) which is coupled on the one hand directly or indirectly to the pendulum mass (12) and on the other hand directly or indirectly to the object (10).

**Revendications**

1. Amortisseur dynamique accordé pour un objet à protéger (10) du type d'un pendule tridimensionnel d'amortissement comprenant une masse (12) de pendule, au moins trois, de préférence quatre tiges (14) de pendule qui sont répartis autour de ladite masse (12) de pendule et qui sont respectivement couplés au niveau d'un premier point de couplage à l'objet (10) et au niveau d'un deuxième point de couplage à une partie inférieure de ladite masse (12) de pendule,
**caractérisé en ce que**
au moins deux tiges (14) de pendule présentent de tel dimensions et arrangements inclinés et écartés que la distance entre ses premiers points de couplage est supérieure à la distance entre ses deuxièmes points de couplage de façon que lors d'un mouvement de la masse (12) de pendule le centre de masse de celle-ci est destiné à être guidé par les tiges (14) de pendule selon la surface d'un ellipsoïde virtuel.

2. Amortisseur dynamique accordé selon la revendication 1, **caractérisé en ce que** le centre de masse (S) de ladite masse (12) de pendule est situé au-dessus des deuxièmes points de couplage.

3. Amortisseur dynamique accordé selon la revendication 1 ou 2, **caractérisé en ce que** ladite masse (12) de pendule est accrochée sur un élément de couplage (20), en particulier une plaque, et le couplage des tiges (14) de pendule à ladite masse (12) de pendule est réalisé par l'intermédiaire de l'élément de couplage (20).

4. Amortisseur dynamique accordé selon l'une quelconque des revendications précédentes, **caractérisé en ce que** au moins un tige (14) de pendule, par rapport à un premier tige (14) de pendule avoisinant en direction périphérique horizontale de ladite masse (12) de pendule, présente une première valeur d'inclinaison et d'écartement et, par rapport à un deuxième tige (14) de pendule également avoisinant en direction périphérique horizontale de ladite masse (12) de pendule, présente une deuxième valeur d'inclinaison et d'écartement qui est différent à la première valeur d'inclinaison et d'écartement.

5. Amortisseur dynamique accordé selon l'une quelconque des revendications précédentes, **caractérisé en ce que** le pendule d'amortissement est adapté pour l'exécution des oscillations de torsion autour d'un axe vertical (z).

6. Objet (10) apte à osciller ou ne pas apte à osciller, muni d'un amortisseur dynamique accordé selon l'une quelconque des revendications précédentes.

7. Objet (10) apte à osciller, muni d'un amortisseur dynamique accordé selon l'une quelconque des revendications précédentes et au moins d'un élément d'amortissement (22) qui est couplé, d'une part, de façon directe ou indirect à ladite masse (12) de pendule et, d'autre part, de façon directe ou indirect à l'objet.

$$I_{Px} = I_{Py} = 9.7\ m$$
$$f_x = f_y = 0.16\ Hz$$

$M_P = 450\ t$

9.7 m

**Fig. 1**

$l_{Py} = 9.7\ m$
$f_y = 0.16\ Hz$

$l_{Px} = 4.0\ m$
$f_x = 0.25\ Hz$

10

16

14 (2)

12

14 (1)

24

18

$l_{Py2}$

$l_{Py1}$

$\approx 7.3\ m$

S

$M_P = 450\ t$

8.0 m

z

y

**Fig. 2**

**Fig. 3**

Fig. 4b

Fig. 4a

Fig. 5

13

Fig. 6b

Fig. 6a

Fig. 7

**IN DER BESCHREIBUNG AUFGEFÜHRTE DOKUMENTE**

**In der Beschreibung aufgeführte Patentdokumente**

- CN 102535674 A
- JP H044335 A
- WO 9202743 A1
- JP S63254247 A